(19) Europäisches Patentamt / European Patent Office / Office européen des brevets

(11) **EP 4 021 738 B1**

(12) **FASCICULE DE BREVET EUROPEEN**

(45) Date de publication et mention
de la délivrance du brevet:
**25.06.2025 Bulletin 2025/26**

(21) Numéro de dépôt: **20757935.0**

(22) Date de dépôt: **27.07.2020**

(51) Classification Internationale des Brevets (IPC):
**B60C 15/04** *(2006.01)*      **B29D 30/48** *(2006.01)*

(52) Classification Coopérative des Brevets (CPC):
**B60C 15/04; B29D 30/48;** B60C 2015/048;
B60C 2200/08

(86) Numéro de dépôt international:
**PCT/FR2020/051371**

(87) Numéro de publication internationale:
**WO 2021/038149 (04.03.2021 Gazette 2021/09)**

(54) **TRINGLE POUR PNEUMATIQUE AGRICOLE**

WULSTKERN FÜR EINEN LANDWIRTSCHAFTLICHEN REIFEN

BEAD CORE FOR AGRICULTURAL TYRE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.08.2019 FR 1909490**

(43) Date de publication de la demande:
**06.07.2022 Bulletin 2022/27**

(73) Titulaire: **COMPAGNIE GENERALE DES
ETABLISSEMENTS MICHELIN
63040 Clermont-Ferrand (FR)**

(72) Inventeurs:
• **REIX, Olivier**
**63040 CLERMONT-FERRAND CEDEX 9 (FR)**
• **LACHAL, Florian**
**63040 CLERMONT-FERRAND CEDEX 9 (FR)**
• **QUENARD, Stéphane**
**63040 CLERMONT-FERRAND CEDEX 9 (FR)**

(74) Mandataire: **M.F.P. Michelin**
**DCJ/PI - F35 - Ladoux
23 place des Carmes-Déchaux
63040 Clermont-Ferrand Cedex 9 (FR)**

(56) Documents cités:
**EP-A1- 0 615 867      JP-A- H 035 218
JP-A- H07 156 617      US-A1- 2008 196 812**

EP 4 021 738 B1

**EP 4 021 738 B1**

**Description**

L'invention concerne une tringle pour pneumatique, le procédé de fabrication de la tringle ainsi qu'un pneumatique comprenant cette tringle.

L'invention sera plus particulièrement décrite en référence à un pneumatique pour véhicule agricole ou forestier.

On connait de l'état de la technique un pneumatique pour véhicule agricole commercialisé sous la marque MICHELIN et appartenant à la gamme AxioBib et présentant des caractéristiques dimensionnelles suivantes : 600/70 R30. Un tel pneumatique comprend un sommet comprenant une armature de sommet surmontée d'une bande de roulement. Deux flancs prolongent le sommet radialement vers l'intérieur. Le pneumatique comporte deux bourrelets radialement intérieurs aux flancs et comportant chacun une structure annulaire de renfort. La structure annulaire de renfort comprend une tringle sensiblement de révolution autour d'un axe comprenant plusieurs enroulements d'au moins un fil agencés axialement les uns à côté des autres sur plusieurs couches radialement superposées les unes sur les autres. Le fil présente une section sensiblement circulaire. Une telle tringle est généralement appelée TPC (Tringle Paquet Carrée). Elle est à base carrée et composée de 72 fils de diamètre 1,30 mm. La tringle de l'état de la technique peut être nue ou bien habillée par de la gomme de bourrage.

Le pneumatique comporte également une armature de carcasse radiale s'étendant depuis les bourrelets à travers les flancs vers le sommet. L'armature de carcasse comporte une ou plusieurs nappes de carcasse, au moins une de ces nappes de carcasse étant ancrée dans chacun des bourrelets. La tringle TPC carrée est adaptée au procédé sans déroulement de ou des nappes de carcasse autour de la tringle. Dans ce procédé, les flancs sont remontés mécaniquement pour ancrer la nappe de carcasse.

Dans le cas des machines de confection utilisant un procédé avec rotation bourrelet, un déroulement de la ou des nappes de carcasse est nécessaire autour de la tringle ou de son habillage, de manière à former, dans chaque bourrelet, un brin aller s'étendant radialement entre chaque bourrelet à travers les flancs et le sommet, et un brin retour s'étendant radialement depuis chaque bourrelet à travers chaque flanc.

Lors de la fabrication du pneumatique par ce procédé avec rotation bourrelet, que l'on réalise par exemple sur un tambour d'assemblage, on pose la tringle sur la nappe de carcasse et on retourne le brin retour autour de la tringle. Puis, on fait tourner la nappe de carcasse et la tringle l'une par rapport à l'autre. Or, avec la tringle de l'état de la technique, cette rotation est difficile du fait de la forme carrée de la tringle TPC. Il est alors nécessaire de mettre une quantité importante de gomme de bourrage pour permettre la rotation de la ou des nappe(s) de carcasse autour de la tringle. Mais, en fonctionnement, cette quantité importante de gomme de bourrage dégrade la performance thermique de la zone basse et donc la performance du pneumatique en endurance ce qui n'est pas souhaitable.

On connait également de l'état de la technique des tringles pour pneumatiques pour véhicule agricole commercialisés sous la marque MICHELIN et appartenant à la gamme AxioBib et présentant des caractéristiques dimensionnelles suivantes : 600/70 R42. De telles tringles sont généralement appelées TPFR-H (Tringle Paquet Fils Ronds) à base hexagonales et sont composées de 42 fils de diamètre 1,55 mm.

Ces tringles, de par leur forme hexagonale, permettent lors du procédé de fabrication avec rotation bourrelet à une ou plusieurs nappes de carcasse de se dérouler autour de la tringle. Cependant, lors de la cuisson du pneumatique de l'état de la technique, on constate une rotation importante de la tringle autour de son axe par rapport au reste du pneumatique, notamment par rapport à la ou aux nappe(s) de carcasse.

On connaît également de l'état de la technique les documents JP H03 5218, EP 0615867 et JP H07 156617 qui divulguent des tringles n'évitant pas leur rotation autour de leur axe lors de la cuisson.

On connaît également de l'état de la technique le document US2008/019812 qui divulgue une tringle avec une structure de base de forme carrée et avec une structure chapeau en forme de triangle.

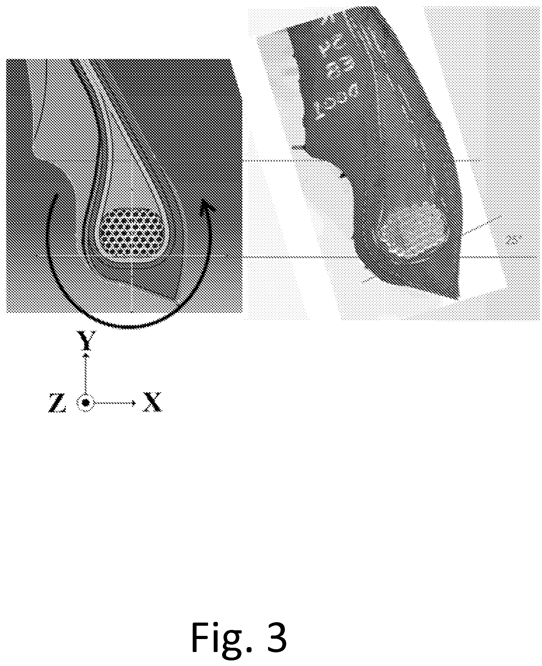

Les fortes tensions appliquées à la ou aux nappe(s) de carcasse lors de la cuisson du pneumatique provoquent une mise en surtension des brins de la ou des nappe(s) de carcasse. La tringle subit alors des niveaux élevés de torsion qui vont entraîner sa rotation comme illustré à la figure 3. Sous l'effet de la surtension des brins de la ou des nappe(s) de carcasse, les enroulements de la tringle, notamment les enroulements au contact des brins de la ou les nappe(s) de carcasse surtendus sont désorganisés, entraînant la désorganisation de la géométrie de la TPFR-H.

La rotation de la tringle lors de la cuisson du pneumatique est très pénalisante car elle dégrade fortement la pression de serrage sur la jante en particulier sur le siège de la jante appelé seat en anglais, entraînant une diminution des pressions de serrage sur jante et un rétrécissement de la surface de serrage sur jante.

Le premier effet de la diminution de la pression de serrage est la diminution de la performance en rotation sur jante sous l'effet de la force motrice. Et le deuxième effet, en particulier dans le cas des véhicules de forte puissance, est une augmentation des frottements du pneumatique contre la jante ce qui accélère la dégradation du bourrelet et peut provoquer des ruptures de la ou des nappe(s) de carcasse au contact de la jante. Lorsqu'ils surviennent, ces problèmes potentiels, conduisent à des contre-performances rédhibitoires en termes d'endurance des pneumatiques.

L'invention a pour but de fournir une tringle permettant le déroulement de la ou des nappe(s) de carcasse autour de la tringle sans pour autant avoir une rotation importante de la tringle lors de la cuisson du pneumatique.

2

A cet effet, l'invention a pour objet une tringle pour pneumatique sensiblement de révolution autour d'un axe, comprenant plusieurs enroulements d'au moins un fil métallique de diamètre d agencés les uns à côté des autres selon une direction P formant un angle $\alpha$ avec la direction axiale dans un demi-plan de coupe radial R, sur N couches superposées les unes sur les autres selon la direction radiale, dans laquelle :

- $\alpha$ va de 0° à 10°;
- dans le demi-plan de coupe R, les enroulements de la tringle forment une structure constituée d'une structure de base et d'une structure chapeau, la structure de base radialement interne en forme de parallélogramme étant directement au contact selon la direction radiale de la structure chapeau radialement externe en forme de trapèze dans lesquelles :
- la structure de base à I couches $C_i$ superposées les unes sur les autres selon la direction radiale avec I impair et $I \geq 3$ comprend :

  - la couche $C_1$ radialement la plus interne et la couche $C_I$ radialement la plus externe comprennent L enroulements ;
  - pour tout i étant un nombre entier allant de 1 à I-2, $L_i = L_{i+2}$ et $|L_i - L_{i+1}| = 1$ avec Li étant le nombre d'enroulements de la couche $C_i$ et Max($L_i$)=L avec :
  - quand i est impair, chaque enroulement axialement le plus externe des couches Ci est agencé au contact du premier côté externe qui est la droite parallèle à la direction radiale et tangente à l'enroulement axialement le plus externe de la couche $C_1$ dans le demi-plan de coupe radial R ; et
  - quand i est pair, l'enroulement axialement le plus externe des couches Ci est agencé au contact des deux enroulements axialement les plus externes de la couche immédiatement inférieure;

- la structure chapeau à J couches $C_j$ superposées les unes sur les autres selon la direction radiale comprend:

  - la couche $C_{I+1}$ de L-1 enroulements superposée à la couche $C_I$ de la structure de base selon la direction radiale et l'enroulement axialement le plus externe étant au contact des deux enroulements axialement les plus externes de la couche immédiatement inférieure; et
  - ou bien, pour tout j étant un nombre entier allant de 1 à J, la couche $C_{I+j}$ est telle que :

    quand j est pair, $L_{I+j} = L_{I+(j-1)}$ ;
    quand j est impair, $L_{I+j} = L - (j+1)/2$ ;
    de façon à ce que : quand j est impair, la couche $C_{I+j}$ est constituée de $L_{I+j}$ enroulements et l'enroulement axialement le plus externe étant agencés au contact des deux enroulements axialement les plus externes de la couche immédiatement inférieure; et
    quand j est pair, la couche $C_{I+j}$ est constituée de $L_{I+j}$ enroulements agencés les uns à côté des autres selon la direction P depuis le premier côté externe ;

- ou bien, pour tout j allant de 1 à J, la couche $C_{I+j}$ est telle que : $L_{I+j} = L - j$ de façon à former un trapèze isocèle ;
- le produit du diamètre d par L va de 13,0 mm à 25,0 mm ; et
- N, I et J étant des nombres entiers non nul tels que N= I+J est inférieur ou égal à 16.

Dans la présente demande, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

La tringle selon l'invention présente une forme générale toroïdale autour d'un axe de révolution. Cet axe de révolution est confondu avec la direction axiale lorsque la tringle est dans le pneumatique.

Par direction axiale, on entend la direction sensiblement parallèle à l'axe de révolution de la tringle ou à l'axe de rotation du pneumatique.

La tringle étant sensiblement de révolution autour d'un axe de révolution, dans le plan de coupe radial qui contient l'axe de révolution, la tringle intersecte deux demi-plans de coupe radiaux R symétriques de part et d'autre de cet axe de révolution. Pour des raisons de clarté, on ne parlera que d'un seul demi-plan de coupe R de la section de la tringle. Ce demi-plan de coupe R est le demi-plan dont la frontière est l'axe de révolution de la tringle et qui s'étend selon la direction radiale.

Par direction radiale, on entend la direction selon un rayon de la tringle ou du pneumatique, c'est-à-dire une direction quelconque intersectant l'axe principal de la tringle ou l'axe de rotation du pneumatique et sensiblement perpendiculairement à cet axe.

On dit également d'une couche de la tringle est « radialement externe » si la direction principale selon laquelle elle s'étend est plus éloignée de l'axe de rotation du pneumatique que celles des autres couches de la tringle. A l'inverse, on dit d'une couche de la tringle, qu'elle est « radialement interne » si la direction principale selon laquelle elle s'étend est plus proche de l'axe de rotation du pneumatique que celles des autres couches de la tringle.

Par couche, on entend un alignement s'étendant selon la direction principale P formant un angle $\alpha$ avec la direction axiale du pneumatique dans le demi-plan de coupe R.

Par directement au contact, on entend qu'aucune autre structure n'est agencée radialement entre la structure de base et la structure chapeau.

La tringle selon l'invention, permet, de par sa base en forme de parallélogramme d'empêcher la rotation de la tringle autour de son axe lors de la cuisson du pneumatique.

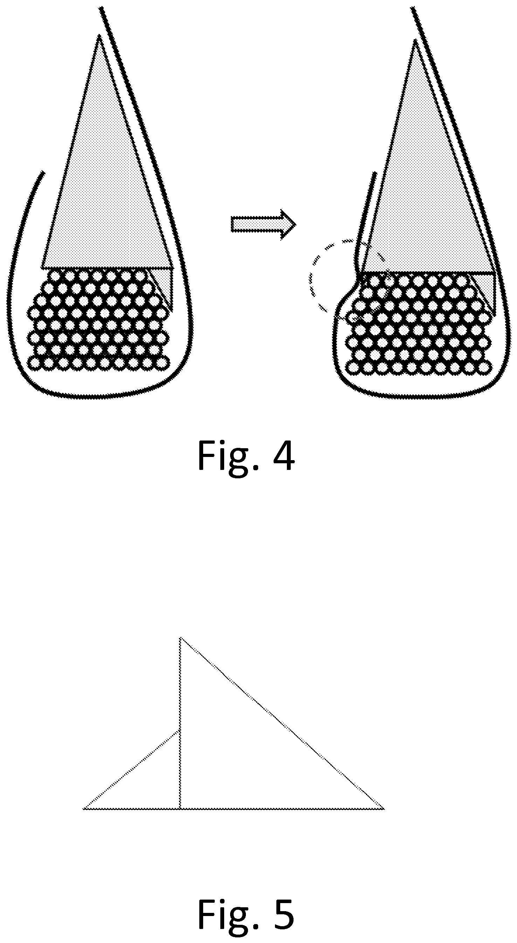

La tringle selon une première variante de l'invention est telle que la structure chapeau forme un trapèze ayant un côté faisant un angle $\alpha$ +90°entre la direction P et le premier côté externe. La tringle permet dans un premier temps de par la forme tronquée de la structure chapeau, le déroulement de ou des nappes de carcasse autour de la tringle. Ainsi, la tringle est asymétrique et n'est tronquée que du côté du brin aller de la ou des nappes de carcasse permettant son déroulement autour de la tringle. Du côté du brin retour, les enroulements supplémentaires permettent d'éviter des problèmes à cru et notamment de bourrelet mou comme illustré à la figure 4. En effet, une gomme de bourrage classique, comme illustrée à la figure 5, peut uniquement combler le trou laissé du côté du brin aller de la carcasse ainsi la présence d'enroulements du côté du brin retour de la ou des nappe(s) de carcasse permet de maintenir la géométrie de la tringle lors du déroulement de la ou des nappe(s) de carcasse autour de la tringle.

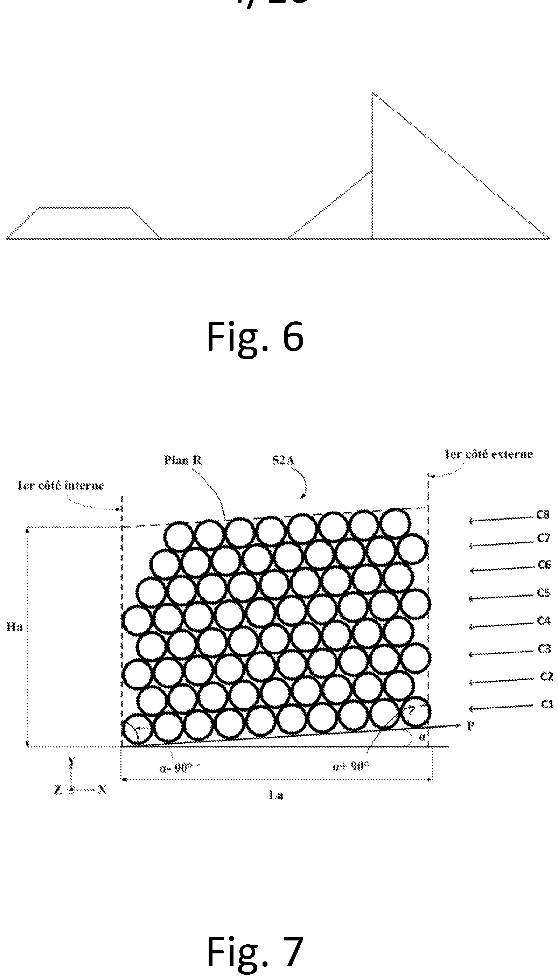

La tringle selon une deuxième variante de l'invention est telle que la structure chapeau forme un trapèze isocèle. La tringle est symétrique et est tronquée au niveau de sa structure chapeau des deux côtés. Pour éviter le phénomène de bourrelet mou évoqué précédemment, on utilise une gomme de bourrage à plage étendue permettant ainsi de combler l'espace vide du côté du brin retour de la ou des nappe(s) de carcasse. Cette gomme de bourrage à plage étendue, comme illustrée à la figure 6, présente une forme supplémentaire qui vient s'enrouler autour de la tringle et combler l'espace vide.

La base de la tringle est déterminée par le produit du diamètre d des fils métalliques par L le nombre d'enroulement. L'homme du métier saura choisir le produit de d par L optimal dans la plage allant de 13,0 à 25,0 mm en fonction de la dimension du pneumatique souhaitée.

Ainsi, la tringle présente une faible rotation sur jante sous l'effet de la force motrice ce qui améliore le rendement du véhicule. En effet, la géométrie de la tringle augmente la pression de serrage sur le siège de la jante ce qui améliore l'ancrage du bourrelet dans la jante et réduit le glissement potentiel entre la jante et le pneumatique. En outre, la faible rotation sur jante permet d'éviter le frottement du pneumatique contre la jante et donc la dégradation du bourrelet qui serait susceptible de dégrader l'endurance du pneumatique.

Ceci va avoir pour effet d'avoir un gain en pression de serrage en augmentant la pression moyenne de serrage au siège de la jante de chaque bourrelet et en augmentant la largueur de la surface de serrage.

La pression moyenne de serrage au siège de chaque bourrelet est déterminée grâce à des relevés de capteurs qui mesurent les pressions de l'intérieur du siège de la jante vers l'extérieur selon la direction P formant un angle $\alpha$ avec la direction axiale, c'est-à-dire sur le crochet de la jante.

Avantageusement, le produit du diamètre d par L est inférieur ou égal à 24,5 mm et de préférence inférieur ou égal à 24,0 mm. La tringle selon l'invention est dimensionnée de telle sorte à répondre au cahier des charges du concepteur de pneumatiques notamment en termes de dimensions maximales.

Avantageusement, le produit du diamètre d par L est supérieur ou égal à 14,5 mm et de préférence supérieur ou égal à 15,0 mm. Plus la longueur selon la direction P est importante et plus on limite le risque de rotation de la tringle lors de la cuisson et ainsi le risque de désorganisation de la tringle, tout en élargissant la surface de serrage au siège de la jante.

De préférence, l'angle $\alpha$ est inférieur ou égal à 8°, de préférence inférieur ou égal à 6°.

Dans un mode de réalisation, l'angle $\alpha$ est égal à 0°. Il est alors relativement aisé de fabriquer cette géométrie de tringle à base plate.

Dans un autre mode de réalisation, l'angle $\alpha$ est strictement supérieur à 0°.

De préférence, l'angle $\alpha$ est supérieur ou égal à 3° et de préférence est supérieur ou égal à 4°. Ainsi, on va améliorer la répartition de la surface de pression au siège de la jante et donc améliorer les performances en rotation sur jante sous l'effet de forts couples. On va également s'assurer ainsi du bon positionnement du maximum de pression au centre du siège de jante et améliorer alors les performances de résistance au décoincement du pneumatique hors du crochet de jante.

Selon d'autres caractéristiques optionnelles de la tringle pour pneumatique indépendantes les unes des autres:

- La tringle pour pneumatique est obtenue par superpositions successives des N couches $C_k$, chaque couche $C_k$ étant obtenue par enroulements successifs d'au moins un fil métallique dans un demi-plan de coupe radial R selon une direction P formant un angle $\alpha$ avec la direction axiale.
- La tringle pour pneumatique comprend un unique fil métallique formant les enroulements des N couches $C_k$.
- Le ou chaque fil métallique est réalisé dans un acier au carbone comprenant entre 0,6 et 1,1% en masse de carbone.
- Le ou chaque fil présente une section sensiblement circulaire.

- Le ou chaque fil métallique est préalablement revêtu d'une composition polymérique ayant une épaisseur allant de 0,05mm à 0,3mm et plus préférentiellement allant de 0,1 à 0,2 mm.

Par composition de polymère ou composition polymérique, on entend que la composition comprend au moins un polymère. De préférence, un tel polymère peut être un thermoplastique, par exemple un polyester ou un polyamide, un polymère thermodurcissable, un élastomère, par exemple du caoutchouc naturel, un élastomère thermoplastique ou un mélange de ces polymères.

Avantageusement, le diamètre d va de 0,95 mm à 3,00 mm, de préférence de 1,20 mm à 2,20 mm et plus préférentiellement de 1,25 mm à 2,05 mm.

Avantageusement, $max(L_k)=max(L_i)=L$ est strictement supérieur à N, avec $C_k$ étant une couche de la tringle (52) choisie parmi les N couches et $L_k$ est le nombre d'enroulements de chaque couche $C_k$, k étant un nombre entier allant de 1 à N. Ainsi, de préférence, la forme de la tringle est telle que la longueur la plus importante est la longueur radialement interne selon la direction P par rapport à la longueur selon la direction radiale, permettant ainsi de maximiser la largeur de la surface de serrage du siège.

De préférence, N va de 7 à 16. Ainsi, le nombre de couches N couches $C_k$ superposées les unes sur les autres dans un plan de coupe radial R est fixé pour des diamètres de fils allant de 1,25 mm à 2,05 mm adapté à des usages de pneumatique pour véhicule agricole ou forestier.

Avantageusement, I va de 5 à 13. De préférence, le nombre de couches de la partie supérieure J est inférieur à celui de la partie inférieure I permettant ainsi une bonne stabilité géométrique de la tringle lors de la cuisson et évitant toute désorganisation de cette dernière.

Avantageusement, J va de 2 à 4 et de préférence de 2 à 3. La tringle selon l'invention possède avantageusement une partie supérieure tronquée permettant le déroulement de ou des nappes de carcasse autour de la tringle.

L'invention a pour autre objet un procédé de fabrication d'une tringle pour pneumatique sensiblement de révolution autour d'un axe comprenant plusieurs enroulements d'au moins un fil de diamètre d agencés les uns à côté des autres selon une direction P formant un angle $\alpha$ avec la direction axiale dans un demi-plan de coupe radial R, sur N couches superposées les unes sur les autres selon la direction radiale, dans lequel:

- on met en contact l'enroulement avec une surface de pose d'une goulotte à l'extrémité radialement interne et on déroule l'enroulement vers le premier côté externe, qui est la droite parallèle à la direction radiale et tangente à l'enroulement axialement le plus externe de la couche, pour former la couche $C_1$ de telle sorte que le produit du diamètre d par L étant strictement inférieur à 25,0 mm,
- on superpose I couches Ci les unes sur les autres selon la direction radiale avec I impair et $I \geq 3$ de façon à former la structure de base en forme de parallélogramme dans le demi-plan de coupe R telle que :

  - la couche $C_1$ radialement la plus interne et la couche $C_I$ radialement la plus externe comprennent L enroulements ;
  - pour tout i étant un nombre entier allant de 1 à I-2, $L_i = L_{i+2}$ et $|L_i - L_{i+1}| = 1$ avec Li étant le nombre d'enroulements de la couche $C_i$ et $Max(L_i)=L$ avec :
  - quand i est impair, chaque enroulement axialement le plus externe des couches Ci est agencé au contact du premier côté externe qui est la droite parallèle à la direction radiale et tangente à l'enroulement axialement le plus externe de la couche $C_1$ dans le demi-plan de coupe radial R ; et
  - quand i est pair, l'enroulement axialement le plus externe des couches Ci est agencé au contact des deux enroulements axialement les plus externes de la couche immédiatement inférieure;

- on superpose J couches $C_j$ les unes sur les autres selon la direction radiale de façon à former une structure chapeau dans le demi-plan de coupe R telle que :
- la couche $C_{I+1}$ de L-1 enroulements superposée à la couche $C_I$ de la structure de base selon la direction radiale ; et

  - ou bien, pour tout j étant un nombre entier allant de 1 à J, la couche $C_{I+j}$ est telle que :

    quand j est pair, $L_{I+j} = L_{I+(j-1)}$ ;
    quand j est impair, $L_{I+j} = L - (j+1)/2$ ;
    de façon à ce que : quand j est impair, la couche $C_{I+j}$ est constituée de $L_{I+j}$ enroulements et l'enroulement axialement le plus externe étant agencé au contact des deux enroulements axialement les plus externes de la couche immédiatement inférieure; et
    quand j est pair, la couche $C_{I+j}$ est constituée de $L_{I+j}$ enroulements agencés les uns à côté des autres selon la direction P depuis le premier côté externe;

- ou bien, pour tout j allant de 1 à J, la couche $C_{I+j}$ est telle que : $L_{I+j} = L - j$ de façon à former un trapèze isocèle ;

avec N, I et J étant des nombres entiers non nul tels que N= I+J est inférieur ou égal à 16.

Dans une variante du procédé de fabrication de la tringle, on débute l'enroulement du premier côté externe, c'est-à-dire qu'on met en contact l'enroulement avec une surface de pose d'une goulotte à l'extrémité radialement interne et on déroule l'enroulement vers le premier côté interne, qui est la droite parallèle à la direction radiale et tangente à l'enroulement axialement le plus interne de la couche, pour former la couche $C_1$ de telle sorte que le produit du diamètre d par L étant strictement inférieur à 25,0 mm.

Dans un mode de réalisation préférentiel, le ou chaque fil métallique est préalablement revêtu d'une composition polymérique ayant une épaisseur allant de 0,1 à 0,2 mm. Cette composition polymérique permet de maintenir la géométrie de la tringle lorsqu'on l'enlève de la forme de pose.

Dans un autre mode de réalisation, on peut mettre des ligatures entourant tout ou partie de la tringle, par exemple des agrafes métalliques constituées de fils métalliques à section rectangulaire permettant de maintenir la géométrie de la tringle lorsqu'on l'enlève de la forme de pose.

Dans un mode de réalisation préférentiel, on revêt la tringle d'au moins un tissu comprenant des éléments filaires comprenant au moins un brin multifilamentaire comprenant plusieurs monofilaments chacun constitué d'un matériau choisi parmi un polyester, un polyamide, une polycétone, un polyuréthane , une fibre naturelle, une fibre minérale, de préférence choisi parmi un polyester, un polyamide aromatique ou aliphatique, une polycétone, un polyuréthane, une fibre naturelle et un assemblage de ces matériaux et plus préférentiellement choisi parmi un polyamide aliphatique et un assemblage de ces matériaux.

Par filament en polyamide aliphatique, on entend un filament de macromolécules linéaires de polymères ou copolymères contenant des fonctions amides ne présentant pas de cycles aromatiques et pouvant être synthétisés par polycondensation entre un acide carboxylique et une amine. Parmi les polyamides aliphatiques, on pourra citer les nylons PA4.6, PA6, PA6.6 ou encore PA6.10, et notamment le Zytel de la société DuPont, le Technyl de la société Solvay ou le Rilsamid de la société Arkema.

Ce revêtement de la tringle selon l'invention permet de garantir un meilleur maintien de la géométrie de la tringle entre sa fabrication et son utilisation dans le pneumatique. En outre, ce revêtement permet d'éviter tout contact entre les fils de la tringle et la nappe de carcasse formant ainsi une barrière.

L'invention a pour autre objet un pneumatique pour véhicule agricole ou forestier comprenant:

- au moins un bourrelet comprenant une tringle selon l'invention,
- une armature de carcasse comprenant au moins une nappe de carcasse ancrée dans chaque bourrelet par un retournement autour de la tringle.

L'invention a pour autre objet un procédé de fabrication d'un pneumatique tel que défini ci-dessus dans lequel:

- on pose la tringle sur la nappe de carcasse,
- on retourne une partie de la nappe de carcasse autour de la tringle, et
- on fait tourner la nappe de carcasse et la tringle l'une par rapport à l'autre.

Dans un mode de réalisation, la tringle est fixe et on fait tourner la nappe de carcasse autour de la tringle, provoquant le déroulement de la nappe de carcasse autour de la tringle.

Dans un autre mode de réalisation, la nappe de carcasse est fixe et on fait tourner l'ensemble de l'ébauche intermédiaire de la structure annulaire de renfort comprenant la tringle autour du tambour de confection, la tringle restant fixe.

Avantageusement, l'armature de carcasse est constituée d'une seule nappe de carcasse ancrée dans chaque bourrelet par un retournement autour de la tringle selon l'invention.

L'invention sera mieux comprise à la lecture de la description des figures qui va suivre, donnée uniquement à titre d'exemple non limitatif et faite en se référant aux dessins dans lesquels:

- la figure 1 est une vue en coupe radiale d'un pneumatique selon l'invention ;
- la figure 2 est une vue détaillée en coupe de la zone T du pneumatique de la figure 1;
- la figure 3 est une illustration de la rotation de la tringle de l'état de la technique autour de la nappe de carcasse après l'étape de cuisson du pneumatique ;
- la figure 4 est une illustration du phénomène de bourrelet mou ;
- les figures 5 et 6 sont deux représentations schématiques de la gomme de bourrage classique et de la gomme de bourrage à plage étendue ;
- la figure 7 est une vue en coupe d'une tringle 52_A selon une première variante du premier mode de réalisation de l'invention ;
- la figure 8 est une vue en coupe d'une tringle 52_S selon une deuxième variante du premier mode de réalisation de

EP 4 021 738 B1

l'invention ;
- la figure 9 est une vue analogue à celle de la figure 7 de tringle 52-5_A selon une première variante du sixième mode de réalisation de l'invention ;
- les figures 10 à 14 sont des vues analogues à celle de la figure 8 de tringles 52-1_S, 52-2_S, 52-3_S, 52-4_S et 52-5_S respectivement selon une deuxième variante des deuxième, troisième, quatrième, cinquième et sixième modes de réalisation ;
- les figures 15 à 18 sont des vues en coupe illustrant différentes étapes du procédé de fabrication du pneumatique selon l'invention ; et
- la figure 19 est une illustration de la goulotte utilisée lors du procédé de fabrication de la tringle selon l'invention.

Le pneumatique selon l'invention présente une forme générale toroïdale autour d'un axe de rotation. Cet axe de rotation définit la direction axiale.

Dans l'emploi du terme « radial », il convient de distinguer plusieurs utilisations différentes du mot par l'homme du métier lorsqu'on parle du pneumatique.

Premièrement, l'expression se réfère à un rayon du pneumatique. C'est dans ce sens qu'on dit d'un élément A qu'il est « radialement intérieur » à un élément B (ou « radialement à l'intérieur » de l'élément B) s'il est plus près de l'axe de rotation du pneumatique que l'élément B. Inversement, un élément C est dit « radialement extérieur à » un élément D (ou « radialement à l'extérieur » de l'élément D) s'il est plus éloigné de l'axe de rotation du pneumatique que l'élément D. On dira qu'on avance « radialement vers l'intérieur (ou l'extérieur) » lorsqu'on avance en direction des rayons plus petits (ou plus grands).

Deuxièmement, un élément de renfort ou une armature est dit « radial » lorsque l'élément de renfort ou les éléments de renfort de l'armature font avec la direction circonférentielle un angle supérieur ou égal à 65° et inférieur ou égal à 90°.

Troisièmement, par « coupe radiale » ou « section radiale » on entend ici une coupe ou une section selon un plan qui comporte l'axe de rotation du pneumatique.

Une direction « axiale » est une direction parallèle à l'axe de rotation du pneumatique. Un élément E est dit « axialement intérieur » à un élément F (ou « axialement à l'intérieur » de l'élément F) s'il est plus près du plan médian du pneumatique que l'élément F. Inversement, un élément G est dit « axialement extérieur à » un élément H (ou « axialement à l'extérieur » de l'élément H) s'il est plus éloigné du plan médian du pneumatique que l'élément H.

Le « plan médian » du pneumatique est le plan qui est normal à l'axe de rotation du pneumatique et qui se situe à équidistance des structures annulaires de renfort de chaque bourrelet.

Une direction « circonférentielle » est une direction qui est perpendiculaire à la fois à un rayon du pneumatique et à la direction axiale.

## EXEMPLE DE PNEUMATIQUE ET DE TRINGLE SELON L'INVENTION

### PNEUMATIQUE 10 SELON L'INVENTION

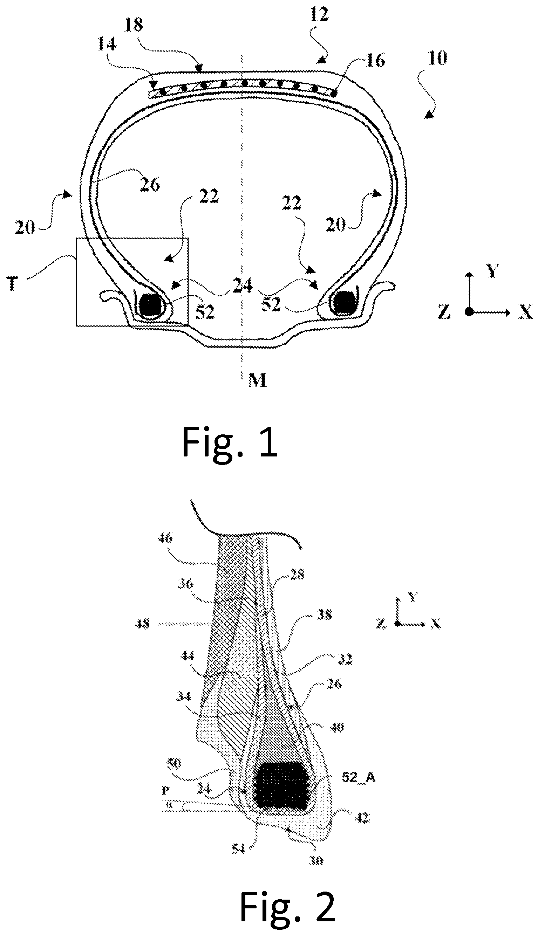

Sur les figures 1 et 2, on a représenté des directions X, Y, Z correspondant à des orientations axiale (X), radiale (Y) et circonférentielle (Z) habituelles d'un pneumatique.

On a représenté sur les figures 1 et 2 un exemple de pneumatique conforme à l'invention et désigné par la référence générale 10. Le pneumatique 10 est préférentiellement destiné à un véhicule industriel choisi parmi les véhicules agricoles ou forestiers. En l'espèce, le pneumatique 10 est destiné à un véhicule agricole, par exemple un tracteur.

Le pneumatique 10 présente un diamètre nominal de jante tel que défini par l'ETRTO (European Tyre and Rim Technical Organisation) allant de 24 à 54 pouces (de 60,96 cm à 137,16 cm). Le pneumatique 10 présente un rapport nominal d'aspect tel que défini par l'ETRTO allant de 0,7 à 0,9.

Le pneumatique 10 comporte un sommet 12 comprenant une armature de sommet 14 comprenant une ou plusieurs nappes de sommet 16 d'éléments de renfort. L'armature de sommet 14 est surmontée d'une bande de roulement 18. L'armature de sommet 14 est disposée radialement intérieure à la bande de roulement 18. Deux flancs 20 prolongent le sommet 12 radialement vers l'intérieur. Le pneumatique 10 comporte deux bourrelets 22 radialement intérieurs aux flancs 20 et comportant chacun une structure annulaire de renfort 24.

Le pneumatique 10 comporte également une armature de carcasse radiale 26. L'armature de carcasse 26 s'étend depuis les bourrelets 22 à travers les flancs 20 vers le sommet 12. L'armature de carcasse 26 comporte une ou plusieurs nappes de carcasse 28, au moins une de ces nappes de carcasse 28 étant ancrée dans chacun des bourrelets 22 par un retournement 30 autour de la structure annulaire de renfort 24 de manière à former, dans chaque bourrelet 22, un brin aller 32 s'étendant radialement entre chaque bourrelet 22 à travers les flancs 20 et le sommet 12, et un brin retour 34 s'étendant radialement depuis chaque bourrelet 22 à travers chaque flanc 20, l'extrémité radialement externe 36 du brin

7

retour 34 étant située radialement à l'extérieur à la structure annulaire de renfort 24 et axialement à l'extérieur au brin aller 32.

Le pneumatique 10 comprend également une nappe intérieure 38 d'étanchéité agencée radialement et axialement intérieure à l'armature de carcasse 26. La nappe intérieure 38 s'étend entre chaque bourrelet 22, en passant par les flancs 20 et le sommet 12.

Chaque bourrelet 22 comprend, en plus de la structure annulaire de renfort 24, une masse 40 de gomme de bourrage agencée dans un espace délimité par les brins aller 32 et retour 34. Chaque bourrelet 22 comprend également une première masse 42 de gomme de protection du bourrelet 22 suivant le retournement 30 de l'armature de carcasse 26.

De plus, chaque bourrelet 22 comprend de plus une masse 44 de gomme de bourrage agencée axialement extérieur à l'armature de carcasse 26, en particulier axialement extérieur au brin retour 34. Chaque flanc 20 comprend une masse 46 de gomme axialement externe délimitant une surface 48 axialement externe du flanc 20 et agencée axialement extérieur à la masse 44 de gomme de bourrage. Enfin, chaque bourrelet 22 comprend une deuxième masse 50 de protection du bourrelet 22 agencée axialement entre la gomme de bourrage 44 et la masse 46 de gomme axialement externe du flanc 20.

Chaque structure annulaire de renfort 24 comprend une tringle 52_A annulaire enrobée dans une masse 54 d'habillage, par exemple comprenant de la gomme. La tringle 52_A est agencée radialement intérieur à la gomme de bourrage 40. La tringle 52_A est conforme à une première variante du premier mode de réalisation de l'invention.

**TRINGLE 52_A SELON UNE PREMIERE VARIANTE DU PREMIER MODE DE REALISATION DE L'INVENTION**

On a représenté sur la figure 7 la tringle 52_A selon une première variante du premier mode de réalisation de l'invention.

La tringle 52_A présente une forme générale de révolution autour de l'axe de révolution du pneumatique 10 qui est sensiblement parallèle à la direction axiale X.

La tringle 52_A comprend n enroulements d'au moins un fil de diamètre d agencés dans un demi-plan de coupe radial R selon une direction P formant un angle $\alpha$ avec la direction axiale les uns à côté des autres sur N couches $C_k$ superposées selon le demi-plan de coupe radial R à la couche $C_{i+1}$. La tringle 52_A est obtenue par superpositions successives des N couches $C_k$ avec k variant de 1 à N inclus, chaque couche $C_k$ étant obtenue par enroulements axialement successifs d'au moins un fil. Le nombre total d'enroulements n de la tringle 52_A est supérieur ou égal à 30, de préférence à 50 et plus préférentiellement à 70, ici n=74.

Dans une première variante du premier mode de réalisation représenté à la figure 6, la tringle 52_A comprend n enroulements d'un unique fil. De préférence, le fil est métallique, présente une section sensiblement circulaire et avantageusement un diamètre compris entre 0,95 mm à 3,00 mm, de préférence de 1,20 mm à 2,20 mm et plus préférentiellement de 1,25 mm à 2,05 mm, ici un diamètre égal à 1,55 mm. Le fil est réalisé dans un acier au carbone comprenant 0,7% en masse de carbone. Le fil métallique est préalablement revêtu d'une composition polymérique ayant allant de 0,05 mm à 0,3 mm, avantageusement allant de 0,1 à 0,2 mm. Ici l'épaisseur est de 0,15 mm.

On a rassemblé dans le tableau 1 ci-dessous le nombre d'enroulements $L_k$ de chaque couche $C_k$. Le nombre maximal d'enroulement $\max(L_k)$ parmi les N couches $C_k$ est tel que $\max(L_k)=\max(L_i)=L$ est strictement supérieur à N. Ici $\max(L_k) = N+2$.

**Tableau 1**

| Numéro de la couche | Nombre d'enroulements $L_k$ |
|---|---|
| C1 | 10 |
| C2 | 9 |
| C3 | 10 |
| C4 | 9 |
| C5 | 10 |
| C6 | 9 |
| C7 | 9 |
| C8 | 8 |

La tringle 52_A comprend au moins une couche $C_k$ avec $k \in ]1, N[$ telle que $L_{k+1} > L_k$ et $L_k < L_{k-1}$, ici $L_3 > L_2$ et $L_2 < L_1$

La tringle selon le demi-plan de coupe R est constituée d'une structure de base radialement interne en forme de parallélogramme représentée ici par les couches C1 à C5 qui est directement au contact selon la direction radiale d'une structure chapeau radialement externe en forme de trapèze représentée ici par les couches C6, C7 et C8.

Et pour la structure chapeau, le nombre d'enroulement de la couche $C_6$ est $L_6$=L-1 = 10-1=9 qui sont agencés les uns à côté des autres selon la direction P depuis le 1$^{er}$ côté externe et la couche $C_7$ a le même nombre d'enroulement que la couche $C_6$ soit $L_7$=9 enroulements qui sont agencés les uns à côté des autres selon la direction P depuis le 1$^{er}$ côté interne. Enfin, la dernière couche $C_8$ est telle que $L_8$=L-(3+1)/2=10-2=8 de façon à former un trapèze.

N est un nombre entier non nul inférieur ou égal à 16, et va de 7 à 16. Ici N=I+J=8.

I va de 5 à 13. Ici I=5.

J va de 2 à 3. Ici J=3.

On a L=10.

Le produit du diamètre d par L étant d'une part strictement supérieur à 14,0 mm, de préférence supérieur ou égal à 14,5 mm et plus préférentiellement supérieur ou égal à 15,0 mm et d'autre part inférieur ou égal à 25,0 mm, de préférence inférieur ou égal à 24,5 mm et plus préférentiellement inférieur ou égal à 24,0 mm. Ici d x L=1,55 x 10= 15,50 mm.

L'angle $\alpha$ va de 0° à 10°, de préférence il est inférieur ou égal à 6° et supérieur ou égal à 4°. Ici $\alpha$ est égal à 5°.

$$\text{L'angle } \alpha+90° = 95°.$$

La tringle comprend une couche $C_1$ et $C_I$=$C_5$ de L=10 enroulements.

## EXEMPLE DE PROCEDE DE FABRICATION DE PNEUMATIQUE ET DE TRINGLE SELON L'INVENTION

### Procédé de fabrication du pneumatique 10

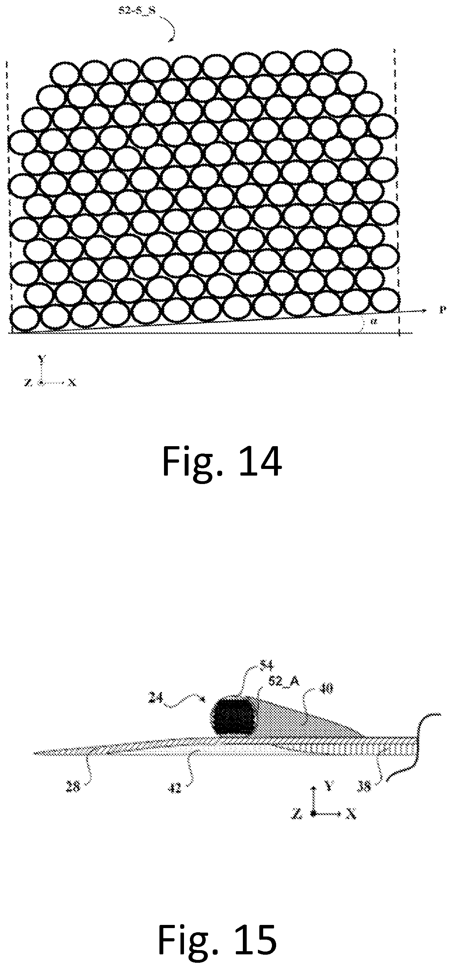

Nous allons maintenant décrire un procédé de fabrication d'un pneumatique 10 selon l'invention en référence aux figures 15 à 18.

Tout d'abord, dans une première phase d'assemblage, on assemble les différentes nappes, masses de gomme et autres éléments décrits précédemment pour former une ébauche crue sur un tambour d'assemblage connu par ailleurs de l'homme du métier.

Ainsi, on pose successivement et dans cet ordre, la première masse 42 de gomme de protection, la nappe intérieure 38 d'étanchéité, une ou plusieurs nappes de carcasse 28 destinée(s) à être ancrée(s) dans le bourrelet 22, la gomme de bourrage 40 et la structure annulaire de renfort 24 comprenant la tringle 52_A et la masse 54 d'habillage. On a ainsi déposé la tringle 52_A sur la ou les nappes de carcasses 28. On obtient l'ébauche intermédiaire représentée à la figure 15.

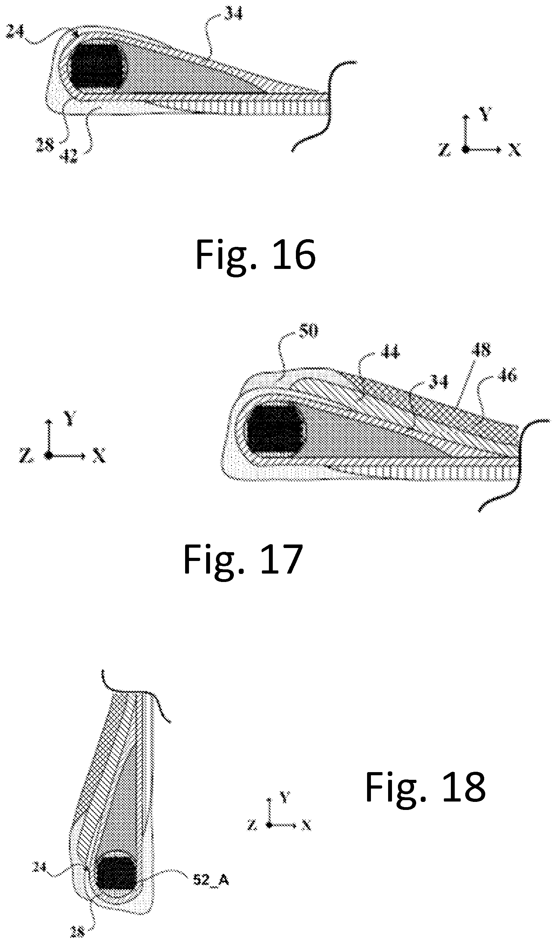

Puis, on retourne la première masse 42 de gomme de protection et une partie de la ou les nappes de carcasse 28, ici le brin retour 34, autour de la structure annulaire de renfort 24. On obtient alors l'ébauche intermédiaire représentée à la figure 16.

Ensuite, on pose successivement et dans cet ordre, la gomme de bourrage 44, la deuxième masse 50 de protection et enfin la masse 46 de gomme axialement externe délimitant la surface 48 axialement externe du flanc 20. On obtient alors l'ébauche intermédiaire représentée à la figure 17.

Enfin, on fait tourner la ou les nappes de carcasse 28 et la tringle 52_A l'une par rapport à l'autre. En l'espèce, on fait tourner l'ensemble de l'ébauche intermédiaire à l'exception de la structure annulaire de renfort 24, autour de cette dernière qui reste sensiblement fixe pendant la rotation. On obtient alors l'ébauche intermédiaire, représentée à la figure 18. On remarquera qu'à l'issue de la rotation, la tringle 52_A présente la même orientation qu'avant la rotation et que les différentes nappes et masses de gomme n'ont pas été déformées sous l'effet de la rotation.

Dans une deuxième phase ultérieure de finition, on ajoute le sommet 12 et la bande de roulement 18 à l'ébauche intermédiaire précédemment obtenue.

Dans une troisième phase de cuisson, on cuit l'ébauche crue finie de façon à obtenir le pneumatique cuit.

### Procédé de fabrication de la tringle 52_A

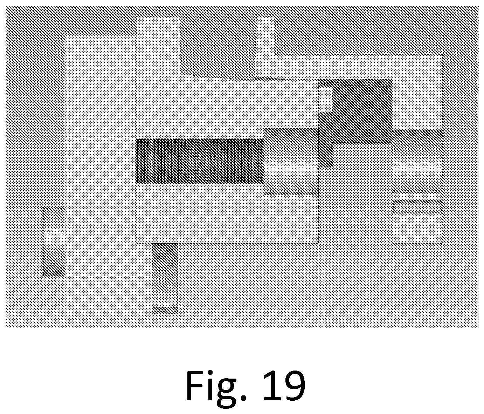

Nous allons maintenant décrire un procédé de fabrication d'une tringle 52_A selon l'invention en référence à la figure 19.

On met en contact le fil de diamètre d= 1,55 mm préalablement revêtu d'une composition élastomérique avec une surface de pose d'une goulotte dans le plan de coupe radial selon la direction P faisant un angle $\alpha$ avec la direction axiale, $\alpha$ = 5° et on déroule le fil d'une goulotte à l'extrémité radialement interne et on déroule le fil de L= 10 enroulements vers le premier côté externe pour former une couche $C_1$ radialement interne de de telle sorte que le produit du diamètre d par L étant strictement inférieur à 25,0 mm, ici dxL = 15,5 mm étant strictement supérieur à 14,0 mm et N, I et J étant des nombres entiers non nul tels que N= I+J est inférieur ou égal à 16, N=8=5+3.

On superpose I couches Ci les unes sur les autres selon la direction radiale avec I impair et I $\geq$3 , ici I=5 de façon à former la structure de base en forme de parallélogramme dans le demi-plan de coupe R telle que :

- la couche $C_1$ radialement la plus interne et la couche $C_5$ radialement la plus externe comprennent L enroulements ;
- pour tout i étant un nombre entier allant de 1 à I-2=3, $L_i = L_{i+2}$ et $|L_i - L_{i+1}|=1$ avec Li étant le nombre d'enroulements de la couche $C_i$ et Max($L_i$)=L avec :
- quand i est impair, chaque enroulement axialement le plus interne des couches Ci est agencé au contact du premier côté interne qui est la droite parallèle à la direction radiale et tangente à l'enroulement axialement le plus interne de la couche $C_1$ dans le demi-plan de coupe radial R.. Ici, I=5 et les couches $C_i$ sont les couches $C_1$ à $C_5$, $L_1 = L_3=L_5 = 10$ enroulements et $L_2=L_4 = 9$ enroulements.

On superpose J= 3 couches $C_j$ les unes sur les autres selon la direction radiale de façon à former une structure chapeau dans le demi-plan de coupe R.

La couche $C_{I+j}$ est telle que : quand j est pair, $L_{I+j} = L_{I+(j-1)}$ et quand j est impair, $L_{I+j} = L - (j+1)/2$ de façon à ce que quand j est impair, la couche $C_{I+j}$ est constituée de $L_{I+j}$ enroulements et l'enroulement axialement le plus externe étant agencé au contact des deux enroulements axialement les plus externes de la couche immédiatement inférieure ; et quand j est pair, la couche $C_{I+j}$ est constituée de $L_{I+j}$ enroulements agencés les uns à côté des autres selon la direction P depuis le premier côté externe.

Ici la couche au contact de la couche $C_6$ est la couche $C_7$ qui a $L_6=L_7= 9$ enroulements et la couche $C_8$ a $L_8 = 10-(3+1)/2= 8$ enroulements.

On revêt la tringle 52_A d'au moins un tissu comprenant des éléments filaires comprenant au moins un brin multifilamentaire comprenant plusieurs monofilaments chacun constitué d'un matériau choisi parmi un polyester, un polyamide, une polycétone, un polyuréthane , une fibre naturelle, une fibre minérale, de préférence choisi parmi un polyester, un polyamide aromatique ou aliphatique, une polycétone, un polyuréthane, une fibre naturelle et un assemblage de ces matériaux et plus préférentiellement choisi parmi un polyamide aliphatique et un assemblage de ces matériaux, ici on revêt la tringle 52_A d'un tissu croisé comprenant un assemblage de 2 brins multifilamentaires comprenant plusieurs monofilaments chacun constitué d'un matériau polyamide aliphatique, le nylon N94/1.

Le tissu est préalablement adhérisé avec une composition polymérique permettant ainsi de bien le maintenir lors de sa pose autour de la tringle.

**TRINGLE 52_S SELON UNE DEUXIEME VARIANTE DU PREMIER MODE DE REALISATION DE L'INVENTION**

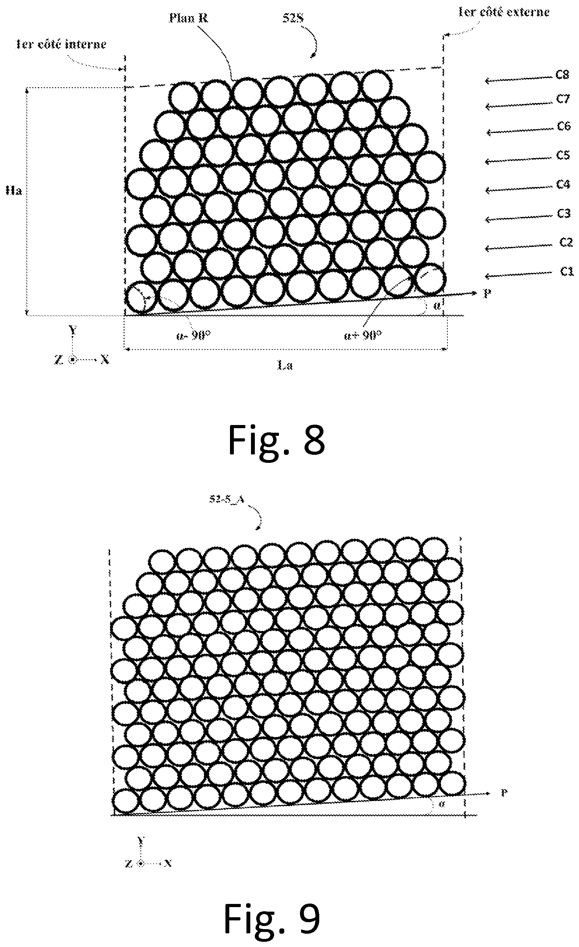

On a représenté sur la figure 8 une tringle 52_S selon une deuxième variante du premier mode de réalisation de l'invention.

A la différence de la tringle selon la première variante du premier mode de réalisation, la tringle 52_S selon deuxième variante du premier mode de réalisation comprend n=72 enroulements.

On a rassemblé dans le tableau 2 ci-dessous le nombre d'enroulements $L_i$ de chaque couche $C_k$. On a max($L_k$) =L=10.

**Tableau 2**

| Numéro de la couche | Nombre d'enroulements $L_k$ |
|---|---|
| C1 | 10 |
| C2 | 9 |
| C3 | 10 |
| C4 | 9 |
| C5 | 10 |
| C6 | 9 |
| C7 | 8 |
| C8 | 7 |

Ici, la tringle selon le demi-plan de coupe R est constituée d'une structure de base en forme de parallélogramme représentée ici par les couches C1 à C5 radialement interne qui est directement au contact selon la direction radiale d'une structure chapeau radialement externe en forme de trapèze représentée ici par les couches C6, C7 et C8.

Et pour la structure chapeau, le nombre d'enroulements $L_{I+j}$ de la couche $C_{I+j}$ est tel que $L_{I+j} =L - j$ de façon à former un trapèze isocèle. Ici $L_6=L-1$ et $L_7=L-2$ et $L_8= L-3$.

**AUTRE EXEMPLE DE TRINGLE SELON UNE PREMIERE VARIANTE DE L'INVENTION**

On a représenté sur la figure 9 une tringle 52-5_A selon une première variante du sixième mode de réalisation de l'invention.

A la différence de la tringle selon la première variante du premier mode de réalisation, la tringle 52-5_A selon la première variante du sixième mode de réalisation comprend N=12 couches et n=148 enroulements.

On a rassemblé dans le tableau 3 ci-dessous le nombre d'enroulements $L_k$ de chaque couche $C_k$. On a max($L_k$) =L =13.

**Tableau 3**

| Numéro de la couche | Nombre d'enroulements $L_k$ |
|---|---|
| C1 | 13 |
| C2 | 12 |
| C3 | 13 |
| C4 | 12 |
| C5 | 13 |
| C6 | 12 |
| C7 | 13 |
| C8 | 12 |
| C9 | 13 |
| C10 | 12 |
| C11 | 12 |
| C12 | 11 |

**AUTRES EXEMPLES DE TRINGLES SELON LA DEUXIEME VARIANTE DE L'INVENTION**

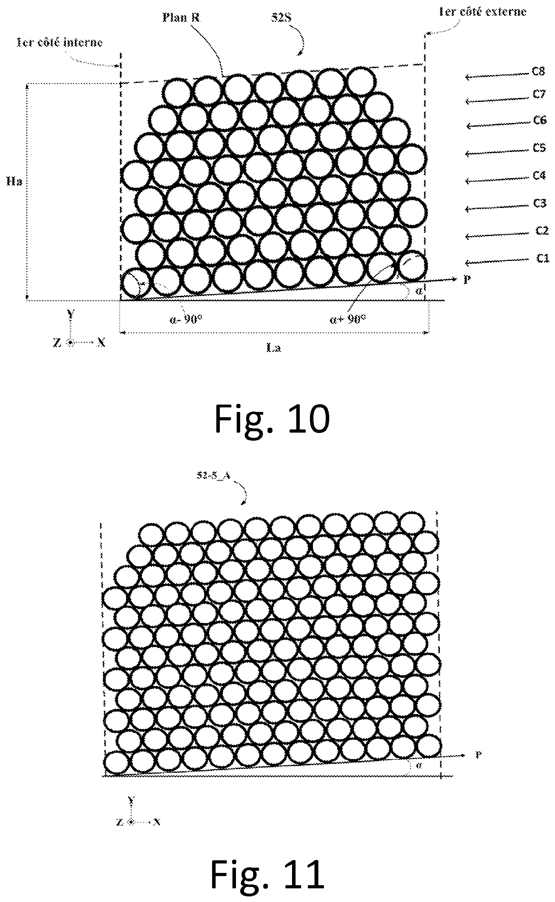

On a représenté sur les figures 10, 11, 12, 13 et 14 des tringles selon d'autres modes de réalisation de l'invention. Sur ces figures, les éléments analogues à ceux de la figure 7 sont désignés par des références identiques.

On a représenté sur la figure 10 une tringle selon un deuxième mode de réalisation de l'invention.

A la différence de la tringle selon la deuxième variante du premier mode de réalisation, la tringle 52-1_S selon le deuxième mode de réalisation comprend N=7 couches et n=51 enroulements.

On a rassemblé dans le tableau 4 ci-dessous le nombre d'enroulements $L_k$ de chaque couche $C_k$. On a max($L_k$) =L=8.

**Tableau 4**

| Numéro de la couche | Nombre d'enroulements $L_k$ |
|---|---|
| C1 | 8 |
| C2 | 7 |
| C3 | 8 |
| C4 | 7 |
| C5 | 8 |
| C6 | 7 |
| C7 | 6 |

On a représenté sur la figure 11 une tringle selon un troisième mode de réalisation de l'invention.

La tringle 52-2_S selon le troisième mode de réalisation comprend N=7 couches et n=58 enroulements.

On a rassemblé dans le tableau 5 ci-dessous le nombre d'enroulements $L_k$ de chaque couche $C_k$. On a max($L_k$)=L=9.

**Tableau 5**

| Numéro de la couche | Nombre d'enroulements $L_k$ |
|---|---|
| C1 | 9 |
| C2 | 8 |
| C3 | 9 |
| C4 | 8 |
| C5 | 9 |
| C6 | 8 |
| C7 | 7 |

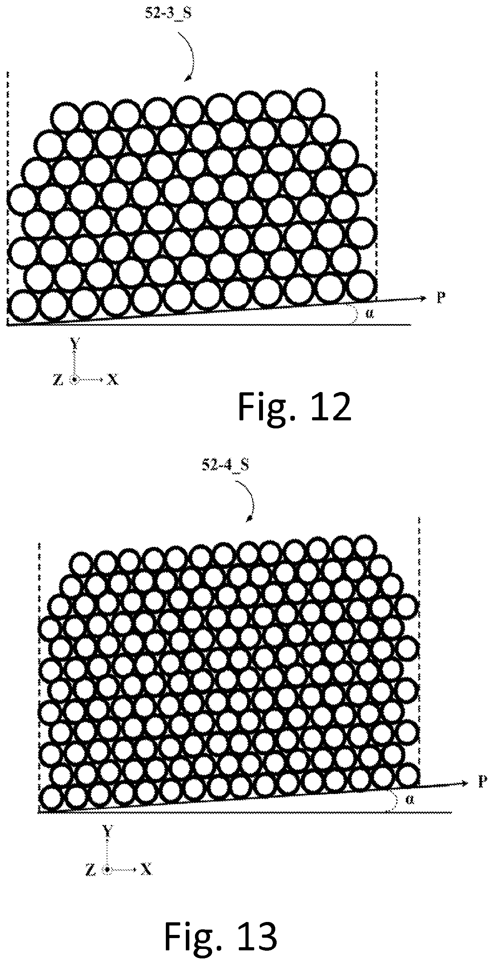

On a représenté sur la figure 12 une tringle selon un quatrième mode de réalisation de l'invention.

La tringle 52-3_S selon le quatrième mode de réalisation comprend N=8 couches et n=88 enroulements.

On a rassemblé dans le tableau 6 ci-dessous le nombre d'enroulements $L_k$ de chaque couche $C_k$. On a max($L_k$)=L =12.

**Tableau 6**

| Numéro de la couche | Nombre d'enroulements $L_k$ |
|---|---|
| C1 | 12 |
| C2 | 11 |
| C3 | 12 |
| C4 | 11 |
| C5 | 12 |
| C6 | 11 |
| C7 | 10 |
| C8 | 9 |

On a représenté sur la figure 13 une tringle selon un cinquième mode de réalisation de l'invention.

La tringle 52-4_S selon le cinquième mode de réalisation comprend N=12 couches et n=182 enroulements.

On a rassemblé dans le tableau 7 ci-dessous le nombre d'enroulements $L_k$ de chaque couche $C_k$. On a max($L_k$)=L =16.

**Tableau 7**

| Numéro de la couche | Nombre d'enroulements $L_k$ |
|---|---|
| C1 | 16 |
| C2 | 15 |
| C3 | 16 |
| C4 | 15 |
| C5 | 16 |
| C6 | 15 |
| C7 | 16 |
| C8 | 15 |
| C9 | 16 |

(suite)

| Numéro de la couche | Nombre d'enroulements $L_k$ |
|---|---|
| C10 | 15 |
| C11 | 14 |
| C12 | 13 |

On a représenté sur la figure 14 une tringle selon une deuxième variante du sixième mode de réalisation de l'invention.

La tringle 52-5_S selon une deuxième variante sixième mode de réalisation comprend N=12 couches et n=146 enroulements.

On a rassemblé dans le tableau 8 ci-dessous le nombre d'enroulements $L_k$ de chaque couche $C_k$. On a $\max(L_k)$ =L =13.

**Tableau 8**

| Numéro de la couche | Nombre d'enroulements $L_k$ |
|---|---|
| C1 | 13 |
| C2 | 12 |
| C3 | 13 |
| C4 | 12 |
| C5 | 13 |
| C6 | 12 |
| C7 | 13 |
| C8 | 12 |
| C9 | 13 |
| C10 | 12 |
| C11 | 11 |
| C12 | 10 |

La tringle comparative TPFR-C est une tringle à base carrée moins large par rapport aux tringles du premier au cinquième mode de réalisation. On a rassemblé dans le tableau 9 ci-dessous le nombre d'enroulements de chaque couche de la TPFR-C.

**Tableau 9**

| Numéro de la couche | Nombre d'enroulements $L_k$ |
|---|---|
| C1 | 9 |
| C2 | 8 |
| C3 | 9 |
| C4 | 8 |
| C5 | 9 |
| C6 | 8 |
| C7 | 7 |

On a résumé dans les tableaux 10 et 11 ci-dessous les caractéristiques des différentes tringles de l'état de la technique TPC et TPFR-H, d'une tringle comparative TPFR- C ainsi que les tringles des premières variantes du premier et du sixième mode de réalisation et les tringles des deuxièmes variantes du premier au sixième mode de réalisation. La largeur La est la projection de la direction perpendiculaire au plan P sur la direction axiale de la tringle et la hauteur Ha est la distance entre la projection de la droite passant par la couche radialement la plus externe de la tringle parallèle à la direction P sur le 1$^{er}$ côté interne et la projection de la direction P sur le 1$^{er}$ coté interne.

**Tableau 10**

| Tringle | TPC | TPFR_H | TPFR_C | 52_A | 52-5_A |
|---|---|---|---|---|---|
| n (nombre de fils) | 72 | 44 | 58 | 74 | 148 |
| Diamètre de fils (mm) | 1,30 | 1,55 | 1,55 | 1,55 | 1,55 |
| L | 9 | 5 | 9 | 10 | 13 |
| d x L (mm) | 11,70 | 7,75 | 13,95 | 15,50 | 20,15 |
| La (mm) | 14,4 | 9,3 | 16,7 | 18,5 | 24,1 |
| Ha (mm) | 12,8 | 11,5 | 11,5 | 13,1 | 19,5 |
| max $L_k$ | 9 | 8 | 9 | 10 | 13 |
| Nombre de couches N | 8 | 7 | 7 | 8 | 12 |

**Tableau 11**

| Tringle | 52_S | 52-1_S | 52-2_S | 52-3_S | 52-4_S | 52-5_S |
|---|---|---|---|---|---|---|
| n (nombre de fils) | 72 | 51 | 58 | 88 | 182 | 146 |
| Diamètre de fils (mm) | 1,55 | 2,00 | 1,75 | 1,30 | 0,96 | 1,55 |
| L | 10 | 8 | 9 | 12 | 16 | 13 |
| d x L (mm) | 15,50 | 16,00 | 15,75 | 15,60 | 15,36 | 20,15 |
| La (mm) | 18,5 | 18,2 | 18,5 | 19,2 | 20,2 | 24,1 |
| Ha (mm) | 13,1 | 14,1 | 12,7 | 11,3 | 13,3 | 19,5 |
| max $L_k$ | 10 | 8 | 9 | 12 | 16 | 13 |
| Nombre de couches N | 8 | 7 | 7 | 8 | 12 | 12 |

## ESSAIS ET TESTS COMPARATIFS

### Performance de rotation sur jante

On a testé la performance de rotation sur jante de chaque pneumatique. En effet, afin que le pneumatique puisse transférer l'intégralité des efforts exercés par le moteur du véhicule sur le sol, et que les performances en endurance de la zone basse du pneumatique soient garanties, il est préférable que la rotation du pneumatique sur la jante soit la plus faible possible.

On mesure donc le coefficient de frottement équivalent pour la route, qui correspond au coefficient de frottement à partir duquel on commence à voir une rotation sur jante du pneumatique à faible charge et à forte charge.

A faible charge, on utilise un véhicule pourvu de deux pneumatiques à tester à une pression de 0,5 bars. On tracte alors, sur du bitume, un poids de masse égale, ici 2,6 tonnes par pneumatique.

A forte charge, on utilise un véhicule pourvu de deux pneumatiques à tester à une pression de 1,6 bars. On tracte alors, sur du bitume, un poids de masse égale, ici 6 tonnes par pneumatique.

Entre le poids à tracter et le véhicule, on place un capteur dynamométrique permettant de mesurer la force F, exprimée en kg, exercée par le véhicule sur le poids à tracter lorsque le pneumatique commence à tourner par rapport à la jante. Ainsi, pour une force F=500 kg exercée pour faire tourner le pneumatique par rapport à la jante, on mesure l'effort maximum tiré (FMax) avant la rotation du pneumatique sur la jante jugé inacceptable. En fonction de la force relevée, on classe les pneumatiques de 1 à 5, 5 indiquant un pneumatique présentant une forte rotation sur jante et 1 indiquant un pneumatique dont la performance de rotation sur jante est maximale.

On a rassemblé les résultats de ces tests dans le tableau 12 ci-dessous pour une tringle de l'état de la technique TPC, une tringle comparative TPFR- C ainsi que les tringles de la première variante du premier mode de réalisation avec un angle $\alpha$ égal à 0° nommée 52_A0 et un angle $\alpha$ égal à 5° nommée 52_A5.

**Tableau 12**

| Tringle | TPC | TPFR_C | 52_A0 | 52_A5 |
|---|---|---|---|---|
| angle $\alpha$ | 0 | 0 | 0 | 5 |
| Rotation sur jante | | | | |
| Faible charge, P=0,5 bars | 1 | 2 | 1 | 1 |
| Forte charge, P=1,6 bars | 2 | 2 | 1 | 1 |

On considère que les classements en 1 et 2 traduisent une faible rotation sur jante et donc que les pneumatiques correspondants satisfont le critère requis de performance de rotation sur jante. On remarque que les pneumatiques comprenant les tringles 52_A0 et 52_A5 selon l'invention présentent un classement en 1 à faible charge et un classement en 1 pour les fortes charges par rapport au pneumatique de l'état de la technique comprenant la tringle TPC et au pneumatique comprenant la tringle comparative TPFR_C.

Ainsi, les pneumatiques selon l'invention présentent une faible rotation sur jante prouvant ainsi leur réponse à la problématique de désorganisation de la géométrie de la tringle lors de la cuisson.

**Gain en pression de serrage et de rotation sur jante en fonction de l'angle $\alpha$**

On mesure la pression moyenne de serrage au siège de chaque bourrelet grâce à des relevés de capteurs qui mesurent les pressions de l'intérieur du siège de la jante vers l'extérieur selon la direction P formant un angle $\alpha$ avec la direction axiale, c'est-à-dire sur le crochet de la jante.

On a rassemblé les résultats de ces tests dans le tableau 13 ci-dessous.

**Tableau 13**

| Tringle | TPC | TPFR_C | 52_A0 | 52_A5 |
|---|---|---|---|---|
| Gain en pression de serrage | - | - | + | ++ |

On constate que les pneumatiques comprenant les tringles 52_A0 et 52_A5 selon l'invention présentent une amélioration de leur performance en pression de serrage par rapport au pneumatique de l'état de la technique comprenant la tringle TPC qui a une surface de contact avec le siège beaucoup plus faible (14,4 mm vs 18, 5 mm pour la tringle 52) et également par rapport au pneumatique comprenant la tringle comparative TPFR_C avec une surface de contact avec le siège plus importante (16,7 mm). On améliore ainsi la répartition de la surface de pression de serrage au siège de la jante et donc les performances en rotation sur jante sous l'effet de forts couples. On s'assure également ainsi du bon positionnement du maximum de pression au centre du siège de la jante et donc les performances de résistance au décoincement du pneumatique hors du crochet de jante, induit par le soulèvement de la tringle du côté axialement extérieur au pneumatique.

On pourra combiner les caractéristiques des différents modes de réalisation précédemment décrits dans la mesure où celles-ci sont compatibles entre elles.

**Revendications**

**1.** Tringle (52) pour pneumatique (10) sensiblement de révolution autour d'un axe, comprenant plusieurs enroulements d'au moins un fil métallique de diamètre d agencés les uns à côté des autres selon une direction P formant un angle $\alpha$ avec la direction axiale dans un demi-plan de coupe radial R, sur N couches superposées les unes sur les autres selon la direction radiale, la tringle (52) avec:

- $\alpha$ va de 0° à 10°;
- dans le demi-plan de coupe R, les enroulements de la tringle (52) forment une structure constituée d'une structure de base et d'une structure chapeau, la structure de base radialement interne en forme de parallélogramme étant directement au contact selon la direction radiale de la structure chapeau radialement externe en forme de trapèze **caractérisée en ce que :**

- la structure de base à I couches Ci superposées les unes sur les autres selon la direction radiale avec I impair et I $\geq$3 comprend :

- la couche $C_1$ radialement la plus interne et la couche $C_I$ radialement la plus externe comprennent L enroulements ;
- pour tout i étant un nombre entier allant de 1 à I-2, $L_i = L_{i+2}$ et $|L_i - L_{i+1}| =1$ avec Li étant le nombre d'enroulements de la couche $C_i$ et $Max(L_i)=L$ avec :
    - quand i est impair, chaque enroulement axialement le plus externe des couches Ci est agencé au contact du premier côté externe qui est la droite parallèle à la direction radiale et tangente à l'enroulement axialement le plus externe de la couche $C_1$ dans le demi-plan de coupe radial R ; et
    - quand i est pair, l'enroulement axialement le plus externe des couches Ci est agencé au contact des deux enroulements axialement les plus externes de la couche immédiatement inférieure;

- la structure chapeau à J couches $C_j$ superposées les unes sur les autres selon la direction radiale comprend:

    - la couche $C_{I+1}$ de L-1 enroulements superposée à la couche $C_I$ de la structure de base selon la direction radiale et l'enroulement axialement le plus externe étant au contact des deux enroulements axialement les plus externes de la couche immédiatement inférieure ; et
    - ou bien, pour tout j étant un nombre entier allant de 1 à J, la couche $C_{I+j}$ est telle que :

        quand j est pair, $L_{I+j} = L_{I+(j-1)}$ ;
        quand j est impair, $L_{I+j} = L - (j+1)/2$ ;
        de façon à ce que : quand j est impair, la couche $C_{I+j}$ est constituée de $L_{I+j}$ enroulements et l'enroulement axialement le plus externe étant agencé au contact des deux enroulements axialement les plus externes de la couche immédiatement inférieure; et
        quand j est pair, la couche $C_{I+j}$ est constituée de $L_{I+j}$ enroulements agencés les uns à côté des autres selon la direction P depuis le premier côté externe ;

    - ou bien, pour tout j allant de 1 à J, la couche $C_{I+j}$ est telle que : $L_{I+j} = L - j$ de façon à former un trapèze isocèle ;

- le produit du diamètre d par L va de 13,0 mm à 25,0 mm ; et
- N, I et J étant des nombres entiers non nul tels que N= I+J est inférieur ou égal à 16.

2. Tringle (52) selon la revendication précédente, dans laquelle le produit du diamètre d par L est inférieur ou égal à 24,5 mm et de préférence inférieur ou égal à 24,0 mm.

3. Tringle (52) selon l'une quelconque des revendications précédentes, dans laquelle le produit du diamètre d par L est supérieur ou égal à 14,5 mm et de préférence supérieur ou égal à 15,0 mm.

4. Tringle (52) selon l'une quelconque des revendications précédentes, dans laquelle l'angle $\alpha$ est inférieur ou égal à 8°, de préférence inférieur ou égal à 6°.

5. Tringle (52) selon l'une quelconque des revendications précédentes, dans laquelle l'angle $\alpha$ est supérieur ou égal à 3° et de préférence est supérieur ou égal à 4°.

6. Tringle (52) selon l'une quelconque des revendications précédentes, dans laquelle le diamètre d va de 0,95 mm à 3,00 mm, de préférence de 1,20 mm à 2,20 mm et plus préférentiellement de 1,25 mm à 2,05 mm.

7. Tringle (52) selon l'une quelconque des revendications précédentes, dans laquelle $max(L_k)=max(L_i)=L$ est strictement supérieur à N, avec $C_k$ étant une couche de la tringle (52) choisie parmi les N couches et $L_k$ est le nombre d'enroulements de chaque couche $C_k$, k étant un nombre entier allant de 1 à N.

8. Tringle (52) selon l'une quelconque des revendications précédentes, dans laquelle N va de 7 à 16.

9. Tringle selon l'une quelconque des revendications précédentes, dans laquelle I va de 5 à 13.

10. Tringle (52) selon l'une quelconque des revendications précédentes, dans laquelle J va de 2 à 3.

11. Procédé de fabrication d'une tringle (52) pour pneumatique (10) sensiblement de révolution autour d'un axe

comprenant plusieurs enroulements d'au moins un fil de diamètre d agencés les uns à côté des autres selon une direction P formant un angle $\alpha$ avec la direction axiale dans un demi-plan de coupe radial R, sur N couches superposées les unes sur les autres selon la direction radiale, **caractérisée en ce que :**

- on met en contact l'enroulement avec une surface de pose d'une goulotte à l'extrémité radialement interne et on déroule l'enroulement vers le premier côté externe, qui est la droite parallèle à la direction radiale et tangente à l'enroulement axialement le plus externe de la couche, pour former la couche $C_1$ de telle sorte que le produit du diamètre d par L est strictement inférieur à 25,0 mm,
- on superpose I couches Ci les unes sur les autres selon la direction radiale avec I impair et I $\geq$3 de façon à former la structure de base en forme de parallélogramme dans le demi-plan de coupe R telle que :

- la couche $C_1$ radialement la plus interne et la couche $C_I$ radialement la plus externe comprennent L enroulements ;
- pour tout i étant un nombre entier allant de 1 à I-2, $L_i = L_{i+2}$ et $|L_i - L_{i+1}| = 1$ avec Li étant le nombre d'enroulements de la couche $C_i$ et Max($L_i$)=L avec :
- quand i est impair, chaque enroulement axialement le plus externe des couches Ci est agencé au contact du premier côté externe qui est la droite parallèle à la direction radiale et tangente à l'enroulement axialement le plus externe de la couche $C_1$ dans le demi-plan de coupe radial R ; et
- quand i est pair, l'enroulement axialement le plus externe des couches Ci est agencé au contact des deux enroulements axialement les plus externes de la couche immédiatement inférieure;

- on superpose J couches $C_j$ les unes sur les autres selon la direction radiale de façon à former une structure chapeau dans le demi-plan de coupe R telle que :

- la couche $C_{I+1}$ de L-1 enroulements superposée à la couche $C_I$ de la structure de base selon la direction radiale ; et

- ou bien, pour tout j étant un nombre entier allant de 1 à J, la couche $C_{I+j}$ est telle que :

quand j est pair,

$$L_{I+j} = L_{I+(j-1)} \ ;$$

quand j est impair,

$$L_{I+j} = L - (j+1)/2 \ ;$$

de façon à ce que : quand j est impair, la couche $C_{I+j}$ est constituée de $L_{I+j}$ enroulements et l'enroulement axialement le plus externe étant agencé au contact des deux enroulements axialement les plus externes de la couche immédiatement inférieure; et quand j est pair, la couche $C_{I+j}$ est constituée de $L_{I+j}$ enroulements agencés les uns à côté des autres selon la direction P depuis le premier côté externe;

- ou bien, pour tout j allant de 1 à J, la couche $C_{I+j}$ est telle que : $L_{I+j} = L - j$ de façon à former un trapèze isocèle ;

avec N, I et J étant des nombres entiers non nul tels que N= I+J est inférieur ou égal à 16.

12. Procédé selon la revendication précédente, dans lequel on revêt la tringle (52) d'au moins un tissu comprenant des éléments filaires comprenant au moins un brin multifilamentaire comprenant plusieurs monofilaments chacun constitué d'un matériau choisi parmi un polyester, un polyamide, une polycétone, un polyuréthane , une fibre naturelle, une fibre minérale, de préférence choisi parmi un polyester, un polyamide aromatique ou aliphatique, une polycétone, un polyuréthane, une fibre naturelle et un assemblage de ces matériaux et plus préférentiellement choisi parmi un polyamide aliphatique et un assemblage de ces matériaux.

13. Pneumatique (10) pour véhicule agricole ou forestier **caractérisé en ce qu'**il comprend:

- au moins un bourrelet comprenant une tringle (52) selon l'une quelconque des revendications 1 à 10,

- une armature de carcasse (26) comprenant au moins une nappe de carcasse (28) ancrée dans chaque bourrelet (22) par un retournement (30) autour de la tringle (52).

14. Pneumatique (10) selon la revendication précédente, dans lequel l'armature de carcasse (26) est constituée d'une seule nappe de carcasse (28) ancrée dans chaque bourrelet (22) par un retournement autour de la tringle (52).

**Patentansprüche**

1. Wulstkern (52) für einen Reifen (10), der im Wesentlichen um eine Achse rotationssymmetrisch ist, umfassend mehrere Windungen mindestens eines Metalldrahts mit dem Durchmesser d, die entlang einer Richtung P nebeneinander angeordnet sind, die einen Winkel $\alpha$ mit der axialen Richtung in einer radialen Schnitthalbebene R bildet, über N entlang der radialen Richtung übereinander gelegte Lagen, wobei bei dem Wulstkern (52):

   - $\alpha$ 0° bis 10° beträgt;
   - die Windungen des Wulstkerns (52) in der Schnitthalbebene R eine Struktur bilden, die aus einer Basisstruktur und aus einer Kappenstruktur besteht, wobei die parallelogrammförmige radial innere Basisstruktur entlang der radialen Richtung direkt in Kontakt mit der trapezförmigen radial äußeren Kappenstruktur ist, **dadurch gekennzeichnet, dass**:

      - die Basisstruktur mit I entlang der radialen Richtung übereinander gelegten Lagen Ci, wobei I ungerade und I $\geq$3 ist, umfasst:

         - die radial innerste Lage $C_1$ und die radial äußerste Lage $C_I$ L Windungen umfassen;
         - für jedes i, das eine ganze Zahl von 1 bis I-2 ist, $L_i = L_{i+2}$ und $|L_i - L_{i+1}|$ =1, wobei Li die Anzahl von Windungen der Lage $C_i$ ist und Max($L_i$)=L, wobei:

            - wenn i ungerade ist, jede axial äußerste Windung der Lagen Ci in Kontakt mit der ersten äußeren Seite angeordnet ist, die die parallel zu der radialen Richtung verlaufende und die axial äußerste Windung der Lage $C_1$ in der radialen Schnitthalbebene R tangierende Gerade ist; und
            - wenn i gerade ist, die axiale äußerste Windung der Lagen Ci in Kontakt mit den beiden axial äußersten Windungen der unmittelbar darunter liegenden Lage angeordnet ist;
         - die Kappenstruktur mit J Lagen $C_j$, die entlang der radialen Richtung übereinander gelegt sind, umfasst:

            - die Lage $C_{I+1}$ aus L-1 Windungen, die entlang der radialen Richtung über die Lage $C_I$ der Basisstruktur gelegt ist, und wobei die axial äußerste Windung in Kontakt mit den beiden axial äußersten Windungen der unmittelbar darunter liegenden Lage ist; und
            - oder aber, für jedes j, das eine ganze Zahl von 1 bis J ist, die Lage $C_{I+j}$ derart ist, dass:

               wenn j gerade ist, $L_{I+j} = L_{I+(j-1)}$;
               wenn j ungerade ist, $L_{I+j} = L - (j+1)/2$;
               so dass: wenn j ungerade ist, die Lage $C_{I+j}$ aus $L_{I+j}$ Windungen besteht, und wobei die axial äußerste Windung in Kontakt mit den beiden axial äußersten Windungen der unmittelbar darunter liegenden Lage angeordnet ist; und
               wenn j gerade ist, die Lage $C_{I+j}$ aus $L_{I+j}$ Windungen besteht, die entlang der Richtung P von der ersten äußeren Seite aus nebeneinander angeordnet sind;

            - oder aber, für jedes j von 1 bis J die Lage $C_{I+j}$ derart ist, dass: $L_{I+j} = L - j$, so dass ein gleichschenkliges Trapez gebildet wird;
         - das Produkt aus dem Durchmesser d und L 13,0 mm bis 25,0 mm beträgt; und
         - wobei N, I und J ganze Zahlen ungleich null derart sind, dass N= I+J kleiner oder gleich 16 ist.

2. Wulstkern (52) nach dem vorhergehenden Anspruch, wobei das Produkt aus dem Durchmesser d und L kleiner oder gleich 24,5 mm und bevorzugt kleiner oder gleich 24,0 mm ist.

3. Wulstkern (52) nach einem der vorhergehenden Ansprüche, wobei das Produkt aus dem Durchmesser d und L größer oder gleich 14,5 mm und bevorzugt größer oder gleich 15,0 mm ist.

4. Wulstkern (52) nach einem der vorhergehenden Ansprüche, wobei der Winkel $\alpha$ kleiner oder gleich 8°, bevorzugt kleiner oder gleich 6° ist.

5. Wulstkern (52) nach einem der vorhergehenden Ansprüche, wobei der Winkel $\alpha$ größer oder gleich 3° und bevorzugt größer oder gleich 4° ist.

6. Wulstkern (52) nach einem der vorhergehenden Ansprüche, wobei der Durchmesser d 0,95 mm bis 3,00 mm, bevorzugt 1,20 mm bis 2,20 mm und noch bevorzugter 1,25 mm bis 2,05 mm beträgt.

7. Wulstkern (52) nach einem der vorhergehenden Ansprüche, wobei max $(L_k)$=max$(L_i)$=L strikt größer als N ist, wobei $C_k$ eine Lage des Wulstkerns (52) ist, die unter den N Lagen gewählt ist, und $L_k$ die Anzahl von Windungen jeder Lage $C_k$ ist, wobei k eine ganze Zahl von 1 bis N ist.

8. Wulstkern (52) nach einem der vorhergehenden Ansprüche, wobei N 7 bis 16 beträgt.

9. Wulstkern nach einem der vorhergehenden Ansprüche, wobei I 5 bis 13 beträgt.

10. Wulstkern (52) nach einem der vorhergehenden Ansprüche, wobei J 2 bis 3 beträgt.

11. Verfahren zur Herstellung eines Wulstkerns (52) für einen Reifen (10), der im Wesentlichen um eine Achse rotationssymmetrisch ist, umfassend mehrere Windungen mindestens eines Drahts mit dem Durchmesser d, die entlang einer Richtung P nebeneinander angeordnet sind, die einen Winkel $\alpha$ mit der axialen Richtung in einer radialen Schnitthalbebene R bildet, über N entlang der radialen Richtung übereinander gelegte Lagen, **dadurch gekennzeichnet, dass**:

- man die Windung mit einer Auflagefläche einer Rinne an dem radial inneren Ende in Kontakt bringt und man die Windung zu der ersten äußeren Seite hin abwickelt, die die parallel zu der radialen Richtung verlaufende und die axial äußerste Windung der Lage tangierende Gerade ist, um die Lage $C_1$ zu bilden, so dass das Produkt aus dem Durchmesser d und L strikt kleiner als 25,0 mm ist,
- man I Lagen Ci entlang der radialen Richtung übereinander legt, wobei I ungerade ist und I $\geq$3, so dass die parallelogrammförmige Basisstruktur in der Schnitthalbebene R gebildet wird, so dass:

- die radial innerste Lage $C_1$ und die radial äußerste Lage $C_l$ L Windungen umfassen;
- für jedes i, das eine ganze Zahl von 1 bis I-2 ist, $L_i = L_{i+2}$ und $|L_i - L_{i+1}| =1$, wobei Li die Anzahl von Windungen der Lage $C_i$ ist und Max$(L_i)$=L, wobei:

- wenn i ungerade ist, jede axial äußerste Windung der Lagen Ci in Kontakt mit der ersten äußeren Seite angeordnet ist, die die parallel zu der radialen Richtung verlaufende und die axial äußerste Windung der Lage $C_1$ in der radialen Schnitthalbebene R tangierende Gerade ist; und
- wenn i gerade ist, die axiale äußerste Windung der Lagen Ci in Kontakt mit den beiden axial äußersten Windungen der unmittelbar darunter liegenden Lage angeordnet ist;
- man J Lagen $C_j$ entlang der radialen Richtung übereinander legt, so dass eine Kappenstruktur in der Schnitthalbebene R gebildet wird, so dass:

- die Lage $C_{l+1}$ aus L-1 Windungen, die über die Lage $C_l$ der Basisstruktur entlang der radialen Richtung gelegt ist; und
- oder aber, für jedes j, das eine ganze Zahl von 1 bis J ist, die Lage $C_{l+j}$ derart ist, dass:

wenn j gerade ist, $L_{l+j} = L_{l+(j-1)}$;
wenn j ungerade ist, $L_{l+j} = L - (j+1)/2$;
so dass: wenn j ungerade ist, die Lage $C_{l+j}$ aus $L_{l+j}$ Windungen besteht, und wobei die axial äußerste Windung in Kontakt mit den beiden axial äußersten Windungen der unmittelbar darunter liegenden Lage angeordnet ist; und
wenn j gerade ist, die Lage $C_{l+j}$ aus $L_{l+j}$ Windungen besteht, die entlang der Richtung P von der ersten äußeren Seite aus nebeneinander angeordnet sind;

- oder aber, für jedes j von 1 bis J die Lage $C_{l+j}$ derart ist, dass: $L_{l+j} = L - j$, so dass ein gleichschenkliges Trapez gebildet wird;

wobei N, I und J ganze Zahlen ungleich null derart sind, dass N= I+J kleiner oder gleich 16 ist.

12. Verfahren nach dem vorhergehenden Anspruch, wobei man den Wulstkern (52) mit mindestens einem Gewebe überzieht, das fadenförmige Elemente umfasst, die mindestens eine Multifilamentfaser umfassen, die mehrere Monofilamente umfasst, die jeweils aus einem Material bestehen, das unter einem Polyester, einem Polyamid, einem Polyketon, einem Polyurethan, einer Naturfaser, einer mineralischen Faser gewählt ist, bevorzugt unter einem Polyester, einem aromatischen oder aliphatischen Polyamid, einem Polyketon, einem Polyurethan, einer Naturfaser und einem Verband aus diesen Materialen gewählt ist und noch bevorzugter unter einem aliphatischen Polyamid und einem Verband aus diesen Materialien gewählt ist.

13. Reifen (10) für ein landwirtschaftliches oder forstwirtschaftliches Fahrzeug, **dadurch gekennzeichnet, dass** er umfasst:

- mindestens eine Wulst, die einen Wulstkern (52) nach einem der Ansprüche 1 bis 10 umfasst,
- eine Karkassenverstärkung (26), die mindestens eine Karkassenlage (28) umfasst, die in jeder Wulst (22) durch einen Umschlag (30) um den Wulstkern (52) verankert ist.

14. Reifen (10) nach dem vorhergehenden Anspruch, wobei die Karkassenverstärkung (26) aus einer einzigen Karkassenlage (28) besteht, die in jeder Wulst (22) durch einen Umschlag um den Wulstkern (52) verankert ist.

## Claims

1. Bead core (52) for a tyre (10) which is substantially rotationally symmetrical about an axis, the bead core comprising a plurality of windings of at least one metallic wire with diameter d arranged next to one another in a direction P forming an angle $\alpha$ with the axial direction in a radial sectional half-plane R, on N layers superposed on one another in the radial direction, the bead core (52) with:

- $\alpha$ ranges from 0° to 10°;
- in the sectional half-plane R, the windings of the bead core (52) form a structure consisting of a base structure and a cap structure, where the radially inner base structure in the shape of a parallelogram is directly in contact in the radial direction with the radially outer cap structure in the shape of a trapezium, being **characterized in that:**

- the base structure of I layers Ci superposed on one another in the radial direction, wherein I is odd and I $\geq$3, comprises:

- the radially innermost layer $C_1$ and the radially outermost layer $C_I$ comprise L windings;
- wherein i is an integral number ranging from 1 to I-2, $L_i = L_{i+2}$ and $|L_i - L_{i+1}| = 1$, wherein Li is the number of windings of the layer $C_i$ and Max($L_i$)=L with:
- when i is odd, each axially outermost winding of the layers Ci is arranged in contact with the first outer side, which is the straight line parallel to the radial direction and tangent to the axially outermost winding of the layer $C_1$ in the radial sectional half-plane R; and
- when i is even, the axially outermost winding of the layers Ci is arranged in contact with the two axially outermost windings of the immediately lower layer;

- the cap structure of J layers $C_j$ superposed on one another in the radial direction comprises:

- the layer $C_{I+1}$ of L-1 windings superposed on layer $C_I$ of the base structure in the radial direction and the axially outermost winding being in contact with the two axially outermost windings of the immediately lower layer; and
- or when j is an integral number between 1 and J, the layer $C_{I+j}$ is such that:

when j is even,

$$L_{I+j} = L_{I+(j-1)};$$

when j is odd,

$$L_{I+j} = L - (j+1)/2;$$

such that: when j is odd, the layer $C_{I+j}$ is formed from $L_{I+j}$ windings and the axially outermost winding is arranged in contact with the two axially outermost windings of the immediately lower layer; and when j is even, the layer $C_{I+j}$ comprises $L_{I+j}$ windings arranged next to one another in the direction P from the first outer side;

- or when j ranges from 1 to J, the layer $C_{I+j}$ is such that: $L_{I+j} = L - j$ so as to form an isosceles trapezium;

    - the product of the diameter d times L ranges from 13.0 mm to 25.0 mm; and
    - N, I and J are integral numbers not equal to zero, such that N= I+J is less than or equal to 16.

2. Bead core (52) according to the preceding claim, wherein the product of the diameter d times L is less than or equal to 24.5 mm, and preferably less than or equal to 24.0 mm.

3. Bead core (52) according to any of the preceding claims, wherein the product of the diameter d times L is greater than or equal to 14.5 mm, and preferably greater than or equal to 15.0 mm.

4. Bead core (52) according to any of the preceding claims, wherein the angle $\alpha$ is less than or equal to 8°, preferably less than or equal to 6°.

5. Bead core (52) according to any of the preceding claims, wherein the angle $\alpha$ is greater than or equal to 3°, preferably greater than or equal to 4°.

6. Bead core (52) according to any of the preceding claims, wherein the diameter d ranges from 0.95 mm to 3.00 mm, preferably from 1.20 to 2.20 mm, and more preferably from 1.25 to 2.05 mm.

7. Bead core (52) according to any of the preceding claims, wherein $\max(L_k)=\max(L_i)=L$ is strictly greater than N, with $C_k$ being a layer of the bead core (52) selected from N layers, and $L_k$ is the number of windings of each layer $C_k$, k being an integral number between 1 and N.

8. Bead core (52) according to any of the preceding claims, wherein N ranges from 7 to 16.

9. Bead core according to any of the preceding claims, wherein I ranges from 5 to 13.

10. Bead core (52) according to any of the preceding claims, wherein J ranges from 2 to 3.

11. Method for manufacture of a bead core (52) for a tyre (10) which is substantially rotationally symmetrical about an axis, the bead core comprising a plurality of windings of at least one wire with diameter d arranged next to one another in a direction P forming an angle $\alpha$ with the axial direction in a radial sectional half-plane R, on N layers superposed on one another in the radial direction, **characterized in that:**

- the winding is placed in contact with a laying surface of a channel at the radially inner end and the winding is unwound towards the first outer side, which is the straight line parallel to the radial direction and tangent to the outermost winding of the layer, in order to form the layer $C_1$ such that the product of the diameter d times L is strictly less than 25.0 mm,
- I layers Ci are superposed on one another in the radial direction, wherein I is odd and I $\geq$3, so as to form the base structure in the form of the parallelogram in the sectional half-plane R such that:

    - the radially innermost layer $C_1$ and the radially outermost layer $C_I$ comprise L windings;
    - wherein i is an integral number ranging from 1 to I-2, $L_i = L_{i+2}$ and $|L_i - L_{i+1}| =1$, wherein Li is the number of windings of the layer $C_i$ and $\max(L_i)=L$ with:

        - when i is odd, each axially outermost winding of the layers Ci is arranged in contact with the first outer side, which is the straight line parallel to the radial direction and tangent to the axially outermost winding of the layer $C_1$ in the radial sectional half-plane R; and
        - when i is even, the axially outermost winding of the layers Ci is arranged in contact with the two axially outermost windings of the immediately lower layer;

- J layers Ci are superposed on one another in the radial direction so as to form a cap structure in the sectional half-plane R such that:
- layer $C_{I+1}$ of L-1 windings is superposed on layer $C_I$ of the base structure in the radial direction; and

- or when j is an integral number between 1 and J, the layer $C_{I+j}$ is such that:

when j is even

$$, L_{I+j} = L_{I+(j-1)};$$

when j is odd,

$$L_{I+j} = L - (j+1)/2;$$

such that: when j is odd, the layer $C_{I+j}$ is formed from $L_{I+j}$ windings and the axially outermost winding is arranged in contact with the two axially outermost windings of the immediately lower layer; and when j is even, the layer $C_{I+j}$ comprises $L_{I+j}$ windings arranged next to one another in the direction P from the first outer side;

- or when j ranges from 1 to J, the layer $C_{I+j}$ is such that: $L_{I+j} = L - j$ so as to form an isosceles trapezium;

with N, I and J integral numbers not equal to zero, such that N= I+J is less than or equal to 16.

12. Method according to the preceding claim, wherein the bead core (52) is covered with at least one fabric comprising filamentary elements comprising at least one multifilament strand comprising several monofilaments, each made up of a material selected from a polyester, a polyamide, a polyketone, a polyurethane, a natural fibre, a mineral fibre, preferably selected from a polyester, an aromatic or aliphatic polyamide, a polyketone, a polyurethane, a natural fibre and an assembly of these materials, more preferably selected from an aliphatic polyamide and an assembly of these materials.

13. Tyre (10) for an agricultural or forestry vehicle, **characterized in that** it comprises:

- at least one bead comprising a bead core (52) according to any of Claims 1 to 10,
- a carcass reinforcement (26) comprising at least one carcass ply (28) anchored in each bead (22) by a return (30) around the bead core (52).

14. Tyre (10) according to the preceding claim, wherein the carcass reinforcement (26) consists of a single carcass ply (28) anchored in each bead (22) by a return around the bead core (52).

Fig. 1

Fig. 2

Fig. 3

Fig. 4

Fig. 5

# Fig. 6

# Fig. 7

Fig. 8

Fig. 9

Plan R    52S    1er côté externe

1er côté interne

Ha

C8
C7
C6
C5
C4
C3
C2
C1

P

α

α - 90°    α + 90°

Y
Z    X

La

# Fig. 10

52-5_A

P

α

Y
Z    X

# Fig. 11

52-3_S

Fig. 12

52-4_S

Fig. 13

Fig. 14

Fig. 15

Fig. 16

Fig. 17

Fig. 18

Fig. 19

EP 4 021 738 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP H035218 B
- EP 0615867 A
- JP H07156617 B
- US 2008019812 A